# EUROPÄISCHE PATENTSCHRIFT

(11) **EP 0 870 355 B1**
(45) Veröffentlichungstag und Bekanntmachung des Hinweises auf die Patenterteilung: **25.10.2000**
(21) Anmeldenummer: 96945536.9
(22) Anmeldetag: 29.10.1996
(51) Int. Cl.: H02K 3/12, H02K 15/06

(54) **STATOR FÜR ELEKTRISCHE MASCHINE**
STATOR FOR AN ELECTRICAL MACHINE
STATOR POUR MOTEUR ELECTRIQUE

(30) Priorität: 30.12.1995 DE 19549180
(43) Veröffentlichungstag der Anmeldung: 14.10.1998
(73) Patentinhaber: ROBERT BOSCH GMBH, 70442 Stuttgart (DE)
(72) Erfinder: SCHUSTEK, Siegfried, D-71254 Ditzingen (DE); FRANZ, Peter, D-31199 Diekholzen (DE)
(86) Internationale Anmeldenummer: DE9602053
(87) Internationale Veröffentlichungsnummer: WO9724792

(56) Entgegenhaltungen:
- EP-A- 0 455 121
- DE-C- 4 414 527
- US-A- 4 131 988
- US-A- 4 650 924

## Beschreibung

### Stand der Technik

Die Erfindung geht aus von einem Stator für eine elektrische Maschine, insbesondere für einen Startermotor in Kraftfahrzeugen, der im Oberbegriff des Anspruchs 1 definierten Gattung.

Bei einem bekannten Stator oder Ständer dieser Art (DE 19 08 323 A1) ist die mäanderförmig um die Pole gelegte Erregerwicklung zu einer in sich geschlossenen, gekrümmten Spule mit achsparallelen Spulenabschnitten und zwei elektrischen Spulenanschlüssen geformt. Die die achsparallelen Spulenabschnitte verbindenden, halbkreisförmigen Wickelköpfe liegen in stirnseitigen Aussparungen der Pole ein, so daß die axiale Länge der Spule praktisch mit der Axiallänge des Jochs oder Polrings zusammenfällt. Der Raum zwischen den aufeinanderfolgenden Polen ist vollständig mit den achsparallelen Spulenabschnitten ausgefüllt. Bei der Herstellung der mäanderförmigen Spule wird von einer Kreisringspule ausgegangen, die in konventioneller Weise bandagiert ist und zur Mäanderspule verbogen wird. Die Pole sind lösbar mit dem Joch verbunden. Beim Zusammenbau des Stators wird zunächst nur jeder zweiter Pol mit dem Joch verbunden und danach die Mäanderspule eingesetzt, wobei sich jeder zweite Wickelkopf der Spule in die stirnseitigen Aussparungen der Pole einsetzt. Danach werden die restlichen Pole in das Joch einlegt und axial verschoben, bis ihre stirnseitigen Aussparungen über die restlichen Wickelköpfe greifen.

Aus der EP 0 455 121 A2 ist es bekannt, die Statorwicklung von elektrischen Maschinen mit einer Vielzahl von Windungen herzustellen und sternförmig vorzuformen, um diese dann in die Nuten eines Startor-Blechpaketes einzuziehen. Die Wicklung wird dabei mit nur einem Draht hergestellt, so daß dementsprechend Wicklungsanfang und Wicklungsende nur von dem einem Spulendraht gebildet werden.

### Vorteile der Erfindung

Der erfindungsgemäße Stator mit den kennzeichnenden Merkmalen des Anspruchs 1 hat den Vorteil, daß durch die Verwendung von Bündelleitern aus mehreren Runddraht-Einzelleitern die Erregerwicklung einen größeren Gestaltungsfreiraum bietet. Der Polkern kann höher ausgeführt werden, wodurch die Wicklung sich mehr radial verteilen läßt und axial nicht so stark aufbaut.

Verwendung von Runddraht-Einzelleitern die Erregerwicklung einen größeren Gestaltungsfreiraum bietet. Der Polkern kann höher ausgeführt werden, wodurch die Wicklung sich mehr radial verteilen läßt und axial nicht so stark aufbaut. Durch das Verdrillen der einzelnen Runddrähte innerhalb eines eine Windung darstellenden Bündelleiters verfestigt sich der Wickel, so daß dieser ausreichend steif und stabil ist, um außerhalb des Ständers gefertigt und anschließend in das Joch eingelegt werden zu können. Die erfindungsgemäße Erregerwicklung hat einen nur geringfügig niedrigeren Kupferfüllfaktor gegenüber einer Erregerwicklung, bei welcher die Erregerpole direkt mit Runddraht bewickelt werden, bei einem deutlichen Fertigungsvorteil durch Vorfertigung außerhalb des Jochs. Außerdem ist der Verschaltungsaufwand einer Mäanderwicklung, die nur noch einen Wicklungsanfang und ein Wicklungsende aufweist, deutlich geringer als bei direkt bewickelten Erregerpolen, wo alle Wicklungsanschlüsse der einzelnen Pole verschaltet werden müssen. Durch das parallele Nebeneinanderliegen der Runddrähte an den äußeren Stirnseiten der Pole hält sich die Wickelkopfausladung in akzeptablen Grenzen und ist nur 1,5 - 1,7fach größer als bei direkter Bewicklung der Erregerpole.

Durch die in den weiteren Ansprüchen aufgeführten Maßnahmen sind vorteilhafte Weiterbildungen und Verbesserungen des im Anspruch 1 angegebenen Stators möglich.

Gemäß einer bevorzugten Ausführungsform der Erfindung ist die Verdrillung der Runddrähte zwischen zwei aufeinanderfolgenden Polen mit einem Drehwinkel von 180° oder einem ganzzahligen Vielfachen von 180° vorgenommen. Bei einem Drehwinkel von 180° oder einem ungeraden Vielfachen von 180° vertauschen die an den Stirnseiten aufeinanderfolgender Pole nebeneinanderliegenden Runddrähte ihre Plätze bei aufeinanderfolgender Polen, bei einem Drehwinkel von einem geradzahligen Vielfachen von 180° behalten sie ihre Lage auf allen Polen bei. Eine Verdrillung der Runddrähte um 180° genügt bereits, um eine ausreichende Steifheit der Mäanderwicklung zu erreichen und sie außerhalb des Stators vorfertigen und in den Stator einsetzen zu können.

Aus wicklungstechnischen Gründen ist dabei gemäß einer vorteilhaften Ausführungsform der Erfindung die Verdrillung der Runddrähte eines Bündelleiters innerhalb zweier in Wicklungsrichtung unmittelbar aufeinanderfolgender Zwischenbereiche zwischen zwei Polen um den gleichen Drehwinkel gegensinnig ausgeführt, also beispielsweise einmal um 180° im Uhrzeigersinn und anschließend um 180° entgegen Uhrzeigersinn.

Gemäß einer bevorzugten Ausführungsform der Erfindung sind die Pole in fortlaufender Reihenfolge einmal fest und einmal lösbar mit dem Joch verbunden und Joch und Pole als Paket aus einer Vielzahl von Blech-Vollstanzschnitten zusammengesetzt. Durch dieses konstruktive Maßnahme wird der Materialverlust beim Stanzen extrem gering gehalten, vor allem wenn der Rotor oder Läufer gleich mit im Vollstanzschnitt ausgestanzt wird.

### Zeichnung

Die Erfindung ist anhand von in der Zeichnung dargestellten Ausführungsbeispielen in der nachfolgenden Beschreibung näher erläutert. Es zeigen:
- Fig. 1: eine perspektivische Darstellung eines Startermotors für Kraftfahrzeuge, teilweise schematisiert und aufgeschnitten,
- Fig. 2: eine perspektivische Darstellung eines Jochabschnittes des Startermotors in Fig. 1 mit einem vom Joch abgezogenen Pol,
- Fig. 3: ausschnittweise eine Stirnansicht eines Stators für einen Startermotor gemäß einem weiteren Ausführungsbeispiel,
- Fig. 4: eine perspektivische Darstellung einer Wicklungsvorrichtung zur Demonstration des Wicklungsaufbaus der Erregerwicklung des Startermotors in Fig. 1 - 3,
- Fig. 5: eine perspektivische Darstellung einer Wicklungsmaske zur Aufnahme der Wicklungsköpfe der Erregerwicklung in Fig. 4,
- Fig. 6: jeweils einen Schnitt längs der Linie VI-VI bzw. und 7 VII-VII in Fig. 4.

### Beschreibung der Ausführungsbeispiele

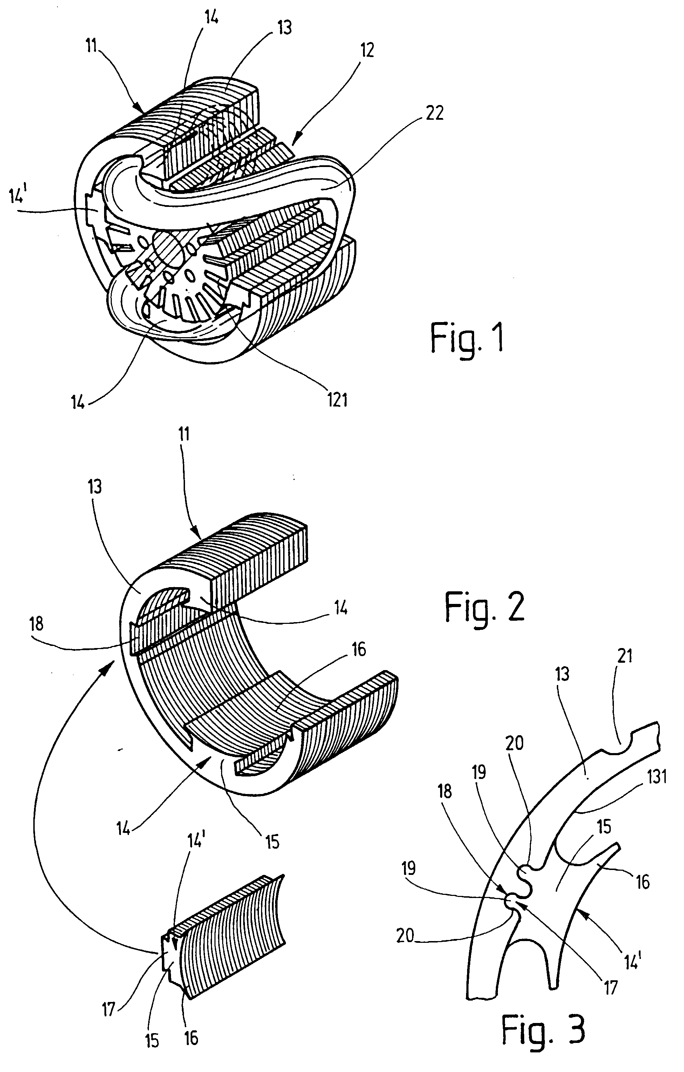

Der in Fig. 1 perspektivisch dargestellte Startermotor für ein Kraftfahrzeug als Beispiel für eine beliebige elektrische Maschine weist einen in einem hier nicht dargestellten Gehäuse befestigten Stator 11 und einen im Stator umlaufenden Rotor 12 auf, der drehfest auf einer hier nicht dargestellten, im Gehäuse gelagerten Abtriebswelle sitzt. Der Stator 11 hat ein hohlzylindrisches Joch 13, auch Polring genannt, von dem eine Anzahl von Polen 14,14' radial nach innen vorsteht. Jeweils die Hälfte alle Pole, hier mit 14 bezeichnet, ist einstückig mit dem Joch 13 ausgebildet, während die andere Hälfte der Pole 14' vom Joch 13 lösbar ist. In Umlaufrichtung des Jochs 13 wechselt sich immer ein fester Pol 14 mit einem lösbaren Pol 14' ab. Jeder Pol 14,14' besteht in bekannter Weise aus einem Polkern 15 und einem am freien Ende des Polkerns 15 angeformten Polschuh 16 und erstreckt sich über die axiale Länge des Jochs 13. Bei den lösbaren Polen 14' trägt der Polkern 15 an seinem vom Polschuh 16 abgekehrten Ende einen Einsteckfuß 17, der formschlüsig in eine axiale Fußführung 18 im Joch 13 einschiebbar ist. Bei dem Stator 11 gemäß Fig. 1 und 2 sind Einsteckfuß 17 und Fußführung 18 in bekannter Schwalbenschwanzkonstruktion ausgeführt, während in Fig. 3 der Einsteckfuß 17 durch zwei parallele Rippen 19 mit Rundprofil und die Fußführung 18 durch zwei parallele Nuten 20 mit kreisrundem Querschnitt im Joch 13 realisiert ist. Wie insbesondere in Fig. 3 deutlich zu erkennen ist, ist die Jochinnenwand 131 über die tangentiale Breite des Polkerns 15 der lösbaren Pole 14' jeweils abgeflacht, so daß der Polkern 15 plan an der Jochinnenwand 131 anliegt. Hierdurch ergibt sich eine große Ubertrittsfläche für den magnetischen Fluß mit sehr geringem Luftspalt. Das Joch 13, die Pole 14,14' mit Polkern 15 und Polschuh 16 sowie der Rotor 12 sind in Stanztechnik aus Blechen hergestellt, wobei in einem einzigen Vollschnitt eine Lamelle des Jochs 13 mit den festen Polen 14, eine Lamelle aller lösbaren Pole 14' und eine Lamelle des Rotors 12 mit Nutung 121 hergestellt wird. Die einzelnen Lamellen werden dann jeweils zu einem Blechpaket zusammengesetzt. Durch die abfallarme Stanztechnik der Vollschnitte lassen sich für die Führung des magnetischen Flusses günstige Konturen der Polschuhe 16 ausbilden, sowie Ausnehmungen 21 für die Unterbringung von Gewindeschrauben mit geringem Aufwand anbringen.

Um die Pole 14,14' ist mäanderförmig eine mehrere Windungen in einer oder mehreren Lagen aufweisende Erregerwicklung 22 gelegt, die aufeinanderfolgende Pole 14,14' wechselweise an voneinander abgekehrten, axial nach außen weisenden Stirnseiten umläuft und sich zwischen den Polen 14,14' längs der Jochinnenwand 131 schräg zur Jochachse erstreckt. Jede Windung der Erregerwicklung 22 wird von einem sog. Bündelleiter gebildet, der aus mehreren Runddrähten 23, die auf den Stirnseiten der Pole 14,14' radial zur Jochachse nebeneinanderliegen, besteht. Die Runddrähte 23 sind in dem von der Stirnseite eines vorausgehenden Pols 14 bis zur Stirnseite des nachfolgenden Pols 14' sich erstreckenden Bereich um 180° so miteinander verdreht oder verdrillt, daß die einzelnen Runddrähte 23 eines Bündelleiters ihre Lage auf der Stirnseite des vorausgehenden Pols 14 gegenüber der Lage auf der Stirnseite des nachfolgenden Pols 14' vertauschen. Auf dem Weg zum in Wicklungsrichtung nächsten Pol 14 werden die einzelnen Runddrähte 23 im Bündelleiter dazu gegensinnig, also um -180° verdreht, so daß sie wieder ihre vorhergehende Lage einnehmen. Diese Verdrillung um 180° bzw. um -180° der einzelnen Runddrähte 23 innerhalb des Bündelleiters wiederholt sich fortlaufend im Bereich zwischen den Polen 14,14' bzw. im Bereich zwischen den Polen 14',14. Am Anfang und am Ende einer jeden Windung werden die einzelnen Runddrähte 23 zu je einem Leiteranschluß verlötet oder verschweißt.

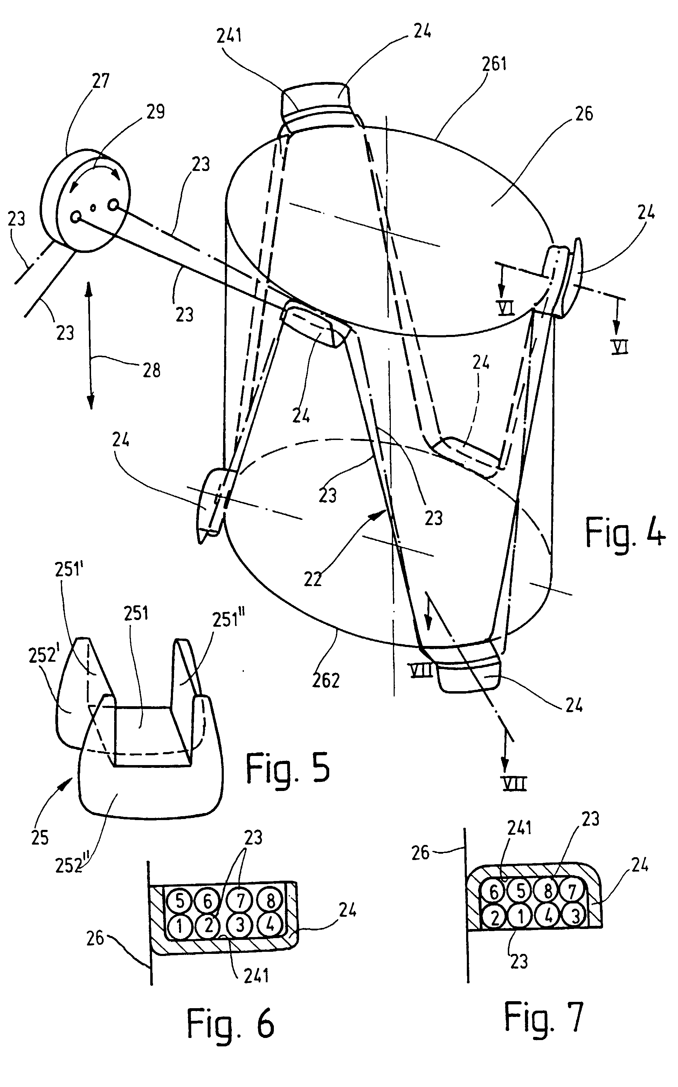

Zur Verdeutlichung des Aufbaus der in Fig. 1 skizzierten Erregerwicklung 22, die außerhalb des Stators 11 als mäanderförmige Spule vorgefertigt wird, ist in Fig. 4 die Wicklungsvorrichtung für die Erregerwicklung 22 schematisch dargestellt. Eine Wickeltrommel 26 trägt auf ihrem Umfang an beiden Stirnrändern versetzt angeordnete Finger 24, deren Anzahl der Anzahl der Pole 14,14' im Stator 11 entspricht. In Fig. 4 ist als Beispiel eine Erregerwicklung 22 für einen sechspoligen Stator 11 dargestellt. Jeweils drei Finger 24 sind an je einem Stirnrand 261 bzw. 262 der Wickeltrommel 26 um 120° gegeneinander versetzt über den Trommelumfang angeordnet. Jeder Finger 24 hat eine Führungsfläche 241 zur Aufnahme der Runddrähte 23, auf die noch eine Kunststoffmaske 25, wie sie in Fig. 5 dargestellt ist, aufgesteckt sein kann. Die Kunststoffmaske 25 ist so ausgebildet, daß sie mit einem U-förmigen Steg 251 axial auf die äußere Stirnseite der Pole 14,14' aufgeschoben werden kann, wobei der Steg 251 sich mit zwei Schenkeln 251' und 251" auf die in Achsrichtung sich erstreckenden Flächen der Polkerne 15 aufschiebt. Auf radial zur Jochachse gegenüberliegenden Seiten trägt der Steg 251 jeweils einen axial vorspringenden Flansch 252' bzw. 252". Zwischen den beiden Flanschen 252' und 252" wird der Wickelkopf der Erregerwicklung 22 gehalten.

Zur Verdeutlichung des Wicklungsaufbaus sind in Fig. 4 zwei parallel gewickelte Runddrähte 23 einer Windung oder eines Bündelleiters der Erregerwicklung 22 gezeigt, wobei der eine Runddraht 23 ausgezogen und der andere Runddraht 23 strichpunktiert dargestellt ist. Beide Runddrähte 23 werden gleichzeitig um die einzelnen Finger 24, die später beim Einsetzen der Erregerwicklung 22 im Stator 11 durch die Pole 14,14' ersetzt werden, herumgeführt, wobei sie auf den Führungsflächen 241 der Finger 24 in Radialrichtung der Wickeltrommelachse nebeneinanderliegen, von dem vorausgehenden Finger 24 zu dem nachfolgenden Finger 24 über den Außenmantel der Wickeltrommel 26 schräg, d.h. unter einem spitzen Winkel, zur Wickeltrommelachse verlaufen und in diesem Bereich um 180° miteinander verdreht sind. Durch diese Verdrehung oder Verdrillung liegt der eine, in Fig. 4 strichpunktiert dargestellte Runddraht 23 auf allen Führungsflächen 241 der Finger 24, die an dem Stirnrand 261 der Wickeltrommel 26 angeordnet sind, auf der Innenseite, d.h. dem Trommelmantel nächstliegend, und auf den Führungsflächen 241 der Finger 24, die an dem Stirnrand 262 der Wickeltrommel 26 angeordnet sind, außen, d.h. von dem Trommelmantel weiter entfernt. Umgekehrt liegt der andere, in Fig. 4 ausgezogen dargestellte Runddraht 23, der auf den Führungsflächen 241 der Finger 24 an dem Stirnrand 261 der Wickeltrommel 26 außen liegt, durch die Vedrillung auf der Führungsfläche 241 der Finger 24 an der Stirnseite 262 der Wickeltrommel 26 nunmehr innen. Eine Windung oder ein Bündelleiter der Erregerwicklung 26 wird üblicherweise aus zwei bis fünf einzelnen Runddrähten 23 parallel gewickelt.

Um die Wirkung der Verdrillung nochmals zu verdeutlichen, ist in Fig. 6 und 7 jeweils ein Schnitt gemäß Linie VI-VI bzw. VII-VII in Fig. 4 durch jeweils einen von zwei in Wickelrichtung aufeinanderfolgenden Fingern 24 bei einer Erregerwicklung 22 mit zwei Runddrähten 23 pro Windung bzw. Bündelleiter und vier Windungen dargestellt, die auf zwei Lagen gewickelt sind. In jedem Bündelleiter sind die einzelnen Runddrähte 23 mit aufsteigenden Ziffern gekennzeichnet. So gehören zum ersten Bündelleiter die Runddrähte 23 mit den Ziffern 1 und 2, zum zweiten Bündelleiter die Runddrähte 23 mit den Ziffern 3 und 4, zum dritten Bündelleiter die Runddrähte 23 mit den Ziffern 5 und 6 und schließlich zum vierten Bündelleiter die Runddrähte 23 mit den Ziffern 7 und 8. Auf der Führungsfläche 241 des Fingers 24 an dem Stirnrand 261 der Wickeltrommel 26 liegt der mit der Ziffer 1 gekennzeichnete Runddraht 23 des ersten Bündelleiters innen, d.h. dem Außenmantel der Wickeltrommel 26 am nächsten. Der Runddraht 23 mit der Ziffer 2 liegt daneben (Fig. 6). Nach der Verdrillung haben die beiden Runddrähte 23 mit den Ziffern 1 und 2, am nachfolgenden Finger 24 an dem Stirnrand 262 der Wickeltrommel 26 ihre Plätze getauscht (Fig. 7). Entsprechend vertauschen auch die mit den Ziffern 3 und 4 gekennzeichneten Runddrähte 23 des nächsten Bündelleiters durch ihre Verdrillung ihre Plätze auf den Führungsflächen 241 aufeinanderfolgender Finger 24. Das gleiche gilt für die mit den Ziffern 5 und 6 bzw. 7 und 8 gekennzeichneten Runddrähte 23 des dritten und vierten Bündelleiters. Jeder Bündelleiter wird mit den beiden Runddrähten 23 durchgehend vom Wicklungsanfang bis zum Wicklungsende der Erregerwicklung 22 um die Finger 24 gelegt und die beiden Runddrähte 23 werden jeweils endseitig zu einem Leiteranschluß verschweißt oder verlötet.

Um diese Verdrillung der einzelnen Runddrähte 23 innerhalb des Bündelleiters fertigungstechnisch zu realisieren, ist der Wickeltrommel 26 eine in Fig. 4 schematisch dargestellte Drahtdüse 27 zugeordnet, die von Vorratsspulen zwei Runddrähte 23 laufend parallel abzieht und der Wicklungstrommel 26 so zuführt, daß sie auf jedem zu belegenden Finger 24 flach nebeneinander auflaufen. Die Drahtdüse 27 führt bei sich entgegen Uhrzeigersinn in Fig. 4 drehender Wickeltrommel 26 einen Hub gemäß Pfeil 28 aus, der dem Axialabstand zweier aufeinanderfolgender Finger 24 an der Wickeltrommel 26 entspricht und dreht sich bei jedem Hub um 180° in die eine Richtung und beim Rückhub um den gleichen Betrag in Gegenrichtung (Pfeil 29 in Fig. 4), wodurch die beschriebene Verdrillung der beiden Runddrähte 23 im Bereich zwischen zwei in Wickelrichtung aufeinanderfolgenden Fingern 24 erreicht wird. Durch die gegensinnige Drehung der Drahtdüse 27 beim Hub und Rückhub wird die Verdrillung der beiden Runddrähte 23 in in Wickelrichtung unmittelbar aufeinanderfolgenden Zwischenbereichen zwischen zwei Polen 14,14' gegensinnig ausgeführt, also einmal rechtssinnig (im Uhrzeigersinn) und einmal linkssinnig (entgegen Uhrzeigersinn) oder umgekehrt. Diese alternierende Drehung der Drahtdüse 27 in Richtung Pfeil 29 in Fig. 4 stellt sicher, daß die Verdrehung der von den Vorratsspulen abgezogenen Runddrähte 23 im Bereich vor der Drahtdüse 27 bei jedem Rückhub wieder aufgehoben wird und hier eine Verdrillung, die den Wickelvorgang undurchführbar machen würde, nicht auftreten kann.

Die so fertiggestellte zweilagige Erregerwicklung 22 wird nach Einklappen der Finger 24 in die Wickeltrommel 26 hinein von der Wickeltrommel 26 abgenommen und in den Stator 11 hineingeschoben, dessen lösbare Pole 14' zuvor entfernt worden sind. Jeder Wickelkopf der Erregerwicklung 22 legt sich dabei an die äußeren Stirnseiten der festen Pole 14 im Stator 11 an. Anschließend werden die Pole 14' mit ihren Einsteckfüßen 17 in die Fußführungen 18 im Joch 13 eingeschoben, wobei sich nunmehr die äußeren Stirnseiten dieser Pole 14' an die noch freien Wickelköpfe der Erregerwicklung 22 anlegen. Die Pole 14' werden entweder durch Verstemmen oder durch Einspannen zwischen Antriebslager und Kommutatorlagerdeckel festgelegt.

Die Erfindung ist nicht auf das beschriebene Ausführungsbeispiel beschränkt. So kann die Verdrillung der Runddrähte 23 einer Windung bzw. eines Bündelleiters auch um ein Mehrfaches von 180°, z.B. um 360°, durchgeführt werden. Dann nehmen die Runddrähte auf allen Fingern 24 die gleiche Lage ein. Eine Vedrillung um 180° genügt aber bereits, um eine ausreichende Steifigkeit der Mäanderwicklung zu erzielen.

Eine bevorzugte Mäanderwicklung wird mit drei Runddrähten pro Bündelleiter und sechs Windungen ausgeführt. In diesem Fall muß die Drahtdüse 27 mit drei Zuführöffnungen für drei parallel von Vorrastsspulen abzuziehenden Runddrähten 23 ausgerüstet sein.

## Patentansprüche

1. Stator für eine elektrische Maschine, insbesondere für einen Startermotor in Kraftfahrzeugen, mit einem hohlzylindrischen Joch (13) und von diesem nach innen vorstehenden, sich über die Axiallänge des Jochs (13) erstreckenden Polen (14,14'), sowie mit einer mäanderförmig um die Pole (14,14') gelegten, aus mehreren Windungen bestehende Erregerwicklung (22), die aufeinanderfolgende Pole (14,14') wechselweise an voneinander abgekehrten, axial nach außen weisenden Stirnseiten umläuft, und sich zwischen den Polen (14,14') längs der Jochinnenwand (131) erstreckt, dadurch gekennzeichnet, daß jede Windung der Erregerwicklung (22) ein Bündelleiter aus mehreren parallel gewickelten Runddrähten (23) ist, die auf den Stirnseiten der Pole (14,14'), vorzugsweise radial zur Jochachse, nebeneinanderliegen und im Bereich zwischen den Polen (14,14') miteinander verdreht oder verdrillt sind.

2. Stator nach Anspruch 1, dadurch gekennzeichnet, daß die Verdrillung der Runddrähte (23) im Bereich zwischen zwei aufeinanderfolgenden Polen (14,14') 180° oder ein ganzzahliges Vielfaches von 180° beträgt.

3. Stator nach Anspruch 1 oder 2, dadurch gekennzeichnet. daß die Drehrichtung der Verdrillung in Bereichen zwischen zwei Polen (14,14'), die in Wickelrichtung unmittelbar aufeinanderfolgen, zueinander gegensinnig ist.

4. Stator nach einem der Ansprüche 1 - 3, dadurch gekennzeichnet, daß die Pole (14,14') in fortlaufender Reihenfolge einmal fest und einmal lösbar mit dem Joch (13) verbunden und Joch (13) und Pole (14,14') als Paket aus einer Vielzahl von Blech-Vollstanzschnitten zusammengesetzt sind.

5. Stator nach Anspruch 4, dadurch gekennzeichnet, daß die Pole (14,14') einen am Joch (13) anliegenden Polkern (15) und einen am freien Polkernende ausgebildeten Polschuh (16) aufweisen und daß an dem vom Polschuh (16) abgekehrten Ende des Polkerns (15) der lösbaren Pole (14') als Einsteckschuh (17) ausgebildet und in dem Joch (13) eine axiale Fußführung (18) vorgesehen ist, in die der Einsteckfuß (17) formschlüssig in Achsrichtung einschiebbar ist.

6. Stator nach Anspruch 5, dadurch gekennzeichnet, daß die Jochinnenwand (131) des Jochs (13) über die tangentiale Breite des Polkerns (15) der lösbaren Pole (14') jeweils abgeflacht ist, so daß der Polkern (15) plan an der Jochinnenwand (131) anliegt.

7. Stator nach Anspruch 5 oder 6, dadurch gekennzeichnet, daß auf jeweils einer Stirnseite der Pole (14,14') eine Kunststoffmaske (25) aufgeschoben ist, die zwischen zwei rechtwinklig vom Polkern (15) abstehenden, durch einen auf den Polkern (15) auf geklemmten Steg (251) verbundenen Flanschen (252',252") die Runddrähte (23) der Bündelleiter in einer oder mehreren axial nebeneinanderliegenden Lagen der Erregerwicklung (22) aufnimmt.

## Claims

1. Stator for an electric machine, in particular for a starter motor in motor vehicles, having a hollow-cylindrical yoke (13) and poles (14,14'), which project inwards from the said yoke and extend over the axial length of the yoke (13), and also having an exciter winding (22), which is laid in a meander-shaped manner around the poles (14,14'), consists of a plurality of turns, runs around the succeeding poles (14,14') alternately at ends which face away from one another and point axially outwards, and extends between the poles (14,14') along the internal wall (131) of the yoke, characterized in that each turn of the exciter winding (22) is a bundle conductor comprising a plurality of parallel-wound round wires (23), which lie next to one another at the ends of the poles (14,14'), preferably radially with respect to the yoke axis, and are twisted or transposed with one another in the region between the poles (14,14').

2. Stator according to Claim 1, characterized in that the transposition of the round wires (23) in the region between two succeeding poles (14,14') is 180E or a whole-number multiple of 180E.

3. Stator according to Claim 1 or 2, characterized in that the direction of rotation of the transposition in regions between two poles (14,14') which directly succeed one another in the winding direction is in mutually opposite senses.

4. Stator according to one of Claims 1 - 3, characterized in that the poles (14,14') are connected in a consecutive sequence first fixedly and then releasably to the yoke (13) and the yoke (13) and poles (14,14') are combined as a stack from a multiplicity of fully stamped laminate sections.

5. Stator according to Claim 4, characterized in that the poles (14,14') have a pole core (15), which bears against the yoke (13), and a pole shoe (16), which is formed on the free end of the pole core, and in that an insertion foot (17) is formed on that end of the pole core (15) of the releasable poles (14') which faces away from the pole shoe (16), and an axial foot guide (18) is provided in the yoke (13), into which foot guide the insertion foot (17) can be pushed in a positively locking manner in the axial direction.

6. Stator according to Claim 5, characterized in that the internal wall (131) of the yoke (13) is in each case flattened over the tangential width of the pole core (15) of the releasable poles (14'), with the result that the pole core (15) bears in a planar manner against the internal wall (131) of the yoke.

7. Stator according to Claim 5 or 6, characterized in that a plastic mask (25) is pushed onto in each case one end of the poles (14,14'), which plastic mask receives, between two flanges (252',252") which protrude at right angles from the pole core (15) and are connected by a web (251) clamped onto the pole core (15), the round wires (23) of the bundle conductors in one or more layers, lying axially next to one another, of the exciter winding (22).

## Revendications

1. Stator pour un moteur électrique, en particulier pour un moteur de démarreur dans des véhicules à moteur, comprenant une culasse cylindrique creuse (13) et des pôles (14, 14') qui font saillie à partir de celle-ci vers l'intérieur, et qui s'étendent au-dessus de l'axe longitudinal de la culasse (13), ainsi qu'avec un enroulement inducteur (22) consistant en plusieurs spires, placé en forme de méandre autour des pôles (14, 14'), qui entoure alternativement des pôles consécutifs (14, 14') sur des côtés frontaux tournés à l'opposé les uns des autres, et orientés axialement vers l'extérieur, et qui s'étend entre les pôles (14, 14') le long de la paroi (131) de la culasse ,
caractérisé en ce que
chaque spire de l'enroulement inducteur (22) est un conducteur disposé en faisceau se composant de plusieurs fils à section circulaire (23), enroulés en parallèle, qui reposent côte à côte sur les côtés frontaux des pôles (14, 14'), de préférence radialement par rapport à l'axe de la culasse, et que l'on fait tourner ou qui sont torsadés les uns avec les autres dans la zone comprise entre les pôles (14, 14').

2. Stator selon la revendication 1,
caractérisé en ce que
le tordage des fils à section circulaire (23) dans la zone comprise entre deux pôles consécutifs (14, 14') atteint 180° ou un multiple entier de 180°.

3. Stator selon la revendication 1 ou 2,
caractérisé en ce que
le sens de rotation du tordage dans les zones comprises entre deux pôles (14, 14'), qui se font directement suite dans le sens de l'enroulement, est inversé l'un par rapport à l'autre.

4. Stator selon l'une des revendications 1 à 3,
caractérisé en ce que
- les pôles (14, 14') sont reliés en ordre continu une fois de façon fixe et une fois de façon amovible à la culasse (13), et
- la culasse (13) et les pôles (14, 14') sont réunis sous forme d'un paquet se composant d'un certain nombre de sections de tôles complètement estampées.

5. Stator selon la revendication 4,
caractérisé en ce que
- les pôles (14, 14') présentent un noyau polaire (15) reposant sur la culasse (13) et une pièce polaire (16) constituée à l'extrémité libre du noyau polaire, et
- on constitue à l'extrémité du noyau polaire (15) située à l'opposé de la pièce polaire (16) des pôles amovibles (14') en tant que pièce polaire (17) et
- on prévoit dans la culasse (13) un guide axial de pied (18), dans lequel on peut enfoncer le pied d'enfichage (17) par complémentarité de forme dans le sens axial.

6. Stator selon la revendication 5,
caractérisé en ce que
la paroi intérieure (131) de la culasse (13) est aplatie sur la largeur tangentielle du noyau polaire (15) des pôles amovibles (14') de telle sorte que le noyau polaire (15) repose de façon plane sur la paroi intérieure de la culasse (131).

7. Stator selon la revendication 5 ou 6,
caractérisé en ce que
sur respectivement un côté frontal des pôles (14, 14') on enfile un masque en matière plastique (25) qui reçoit entre deux brides (252', 252") reliées par une entretoise (251) agrafée sur le noyau polaire (15) et faisant saillie à angle droit à partir du noyau polaire (15), les fils à section circulaire (23) des conducteurs disposés en faisceau dans une ou plusieurs couches axiales situées les unes à côté des autres de l'enroulement inducteur (22).
